# EUROPÄISCHE PATENTSCHRIFT

(11) **EP 4 103 763 B1**
(45) Veröffentlichungstag und Bekanntmachung des Hinweises auf die Patenterteilung: **31.12.2025**
(21) Anmeldenummer: 20812221.8
(22) Anmeldetag: 19.11.2020
(51) Int. Cl.: C25B 1/04, C25B 15/02, C25B 15/08, B01D 53/04, C25B 15/027

(54) **VERFAHREN UND ANLAGE ZUR ELEKTROCHEMISCHEN SAUERSTOFFPRODUKTION**
METHOD AND SYSTEM FOR ELECTROCHEMICAL OXYGEN PRODUCTION
PROCÉDÉ ET SYSTÈME DE FABRICATION ÉLECTROCHIMIQUE D'OXYGÈNE

(30) Priorität: 14.02.2020 DE 102020000936; 09.04.2020 EP 20020168
(43) Veröffentlichungstag der Anmeldung: 21.12.2022
(73) Patentinhaber: Linde GmbH, 82049 Pullach (DE)
(72) Erfinder: PESCHEL, Andreas, 82515 Wolfratshausen (DE); HENTSCHEL, Benjamin, 80689 München (DE)
(74) Vertreter: Fischer, Werner
(86) Internationale Anmeldenummer: PCT/EP2020/025523
(87) Internationale Veröffentlichungsnummer: WO 2021/160235

(56) Entgegenhaltungen:
- EP-A1- 2 554 713
- EP-A1- 3 581 683
- EP-A2- 0 442 042
- WO-A2-02/23657
- DE-A1- 102008 010 202

## Beschreibung

Die vorliegende Erfindung betrifft ein Verfahren sowie eine Anlage zur elektrochemischen Sauerstoffproduktion gemäß den Oberbegriffen der unabhängigen Patentansprüche.

### Stand der Technik

Generell gibt es verschiedene Möglichkeiten, Sauerstoff als Gas bereitzustellen. Sehr weit verbreitet ist beispielsweise die Luftzerlegung, wobei die Luft zunächst verflüssigt und dann fraktioniert destilliert wird. EP3581683 offenbart, dass Wasser von den Gasen entfernt und zurückgeführt in die Zelle wird, bevor eine katalytische Umsetzung erfolgt.

Auch die elektrochemische Umsetzung verschiedener Sauerstoff enthaltender Verbindungen, wie beispielsweise Wasser oder Kohlenstoffdioxid, ist bekannt und liefert Sauerstoff. In den meisten Fällen wird jedoch der gebildete Sauerstoff nicht als Produkt verwertet, sondern aus dem Verfahren ausgeschleust und verworfen.

Je nach Anwendung können sehr hohe Anforderungen an die Reinheit des Sauerstoffs gestellt werden, so dass eine möglichst quantitative Abtrennung von Fremdstoffen aus dem Sauerstoff erforderlich sein kann. Außerdem besteht im Umgang mit Sauerstoff generell das Problem, dass Anlagenteile, die mit erhöhten Sauerstoffkonzentrationen beaufschlagt werden, korrosionsfest ausgeführt sein müssen.

In Gasgemischen, in denen hohe Sauerstoffkonzentrationen vorliegen, können sich außerdem je nach Zusammensetzung der Bestandteile explosive Gemische bilden, die ein Sicherheitsrisiko darstellen. Dies ist insbesondere dann der Fall, wenn der Sauerstoff aus einem Elektrolyseprozess stammt, in dem Wasserstoff gebildet wird.

Zwar wird der Wasserstoff in Elektrolyseprozessen typischerweise auf der Kathodenseite gebildet; aufgrund der hohen Mobilität des kleinen Wasserstoffmoleküls kann jedoch eine Verunreinigung des auf der Anodenseite der Elektrolyse gebildeten Sauerstoffs mit Wasserstoff, der durch die die Anodenseite und die Kathodenseite trennende Membran, beispielsweise eine Protonenaustauschmembran (PEM), eine Anionenaustauschmembran (AEM) oder eine Festoxid-Hochtemperaturmembran einer Festoxid-Elektrolysezelle (SOEC), hindurchtritt, nicht vollständig verhindert werden.

Grundsätzlich laufen bei der Elektrolyse folgende Reaktionen ab.
Für den Fall einer Elektrolyse mit einer PEM:

| | |
|---|---|
| An der Anode: | H₂O → ½ O₂ + 2 H⁺ + 2 e⁻ |
| An der Kathode: | 2 e⁻ + 2 H⁺ → H₂ |

Für den Fall einer Elektrolyse mit einer AEM:

| | |
|---|---|
| An der Anode: | 2 OH⁻ → ½ O₂ + 2 H₂O + 2 e⁻ |
| An der Kathode: | 2 e⁻ + 2 H₂O → H₂ + 2 OH⁻ |

Für den Fall einer Elektrolyse mit einer SOEC:

| | |
|---|---|
| An der Anode: | 2 O²⁻ → O₂ + 4 e⁻ |
| An der Kathode: | H₂O + 2 e⁻ → H₂ + O²⁻ |

Wie oben bereits erwähnt, können auch andere Sauerstoff enthaltende Verbindungen einer Elektrolyse unterworfen werden, um Sauerstoff zu gewinnen. Sofern die eingesetzten Edukte nicht wasserfrei sind, können die oben beschriebenen Reaktionen dabei als Nebenreaktionen auftreten, so dass in jedem Fall mit der Bildung von Wasserstoff gerechnet werden muss.

Bevor die vorliegende Erfindung näher beschrieben wird, sollen zunächst einige hierbei verwendete Begriffe erläutert werden.

Alle im Rahmen der vorliegenden Anmeldung angegebenen Zusammensetzungen, Konzentrationen und Anteile an Gemischen beziehen sich auf die volumetrische Zusammensetzung bzw. Konzentration bzw. den Volumenanteil, jeweils bezogen auf das trockene, also wasserfreie Gemisch, sofern nicht explizit anders angegeben.

Im Sprachgebrauch der vorliegenden Patentanmeldung ist ein Gasgemisch reich an einer oder mehreren Komponenten, wenn es einen Anteil von über 50%, 60%, 70%, 80%, 90%, 95%, 98%, 99%, 99,9% oder 99,99% an dieser einen oder diesen mehreren Komponenten aufweist, wobei sich im Falle mehrerer Komponenten der Anteil als Summe der Einzelanteile versteht.

Dementsprechend ist ein Gemisch arm an einer oder mehreren Komponenten, wenn es nicht reich an dieser oder diesen ist, der Anteil dieser am Gesamtgemisch also unter 50%, 40%, 30%, 20%, 10%, 5%, 2%, 1%, 0,1% oder 0,01% liegt.

Ein von einer oder mehreren Komponenten freies Gas oder Gemisch ist im hier verwendeten Sprachgebrauch sehr arm an dieser Komponente und weist einen Anteil von weniger als 1000 ppm, 100 ppm, 10 ppm, 1 ppm, 100 ppb, 10 ppb oder 1 ppb auf. Insbesondere liegt der Anteil der Komponenten, an denen das Gas bzw. Gemisch frei ist unter einer Nachweisgrenze der Komponenten.

Ein an einer oder mehreren Komponenten angereichertes Gas oder Gemisch bezeichnet ein Gas bzw. Gemisch, das eine höhere Konzentration an der einen oder den mehreren Komponenten, bezogen auf ein Ausgangsgas bzw. -gemisch, aufweist. Insbesondere weist ein an einer Komponente angereichertes Gas einen im Vergleich zu dem entsprechenden Ausgangsgas mindestens 1,1-, 1,3-, 2-, 3-, 10-, 30-, 100-, 300-, oder 1000-fachen Anteil dieser Komponente auf.

Dementsprechend weist ein an einer Komponente abgereichertes Gas einen im Vergleich zu dem entsprechenden Ausgangsgas höchstens den 0,001-, 0,003-, 0,01-, 0,03-, 0,1-, 0,3-, 0,5- oder 0,9-fachen Anteil dieser Komponente auf.

Ist nachfolgend davon die Rede, dass ein Teil eines Gases oder eines Gemischs verwendet wird, kann dies entweder bedeuten, dass ein Volumenanteil des Gases oder Gemischs bis 100% des Gesamtnormvolumens des Ursprungsgases bzw. -gemischs mit derselben Zusammensetzung wie dieses verwendet wird, oder dass ein Gas bzw. Gemisch, das lediglich unter Verwendung von bestimmten Komponenten des Ursprungsgases bzw. -gemischs gebildet wurde, verwendet wird. Der Teil des Gases oder Gemischs kann also dieselbe oder eine andere Zusammensetzung wie bzw. als das Ursprungsgas bzw. -gemisch aufweisen.

Unter einer Explosion wird im hier verwendeten Sprachgebrauch eine Verpuffung, eine Deflagration oder eine Detonation verstanden.

Die vorliegende Erfindung stellt sich die Aufgabe, Sauerstoff, der in einer Elektrolysereaktion gewonnen wird, durch katalytische Oxidation von Wasserstoff zu befreien und dabei eine zu starke Temperaturerhöhung während der katalytischen Reaktion zu verhindern.

### Offenbarung der Erfindung

Zur Lösung dieser Aufgabe schlägt die vorliegende Erfindung ein Verfahren sowie eine Anlage zur elektrochemischen Sauerstoffproduktion mit den Merkmalen der unabhängigen Patentansprüche vor. Ausgestaltungen sind Gegenstand der abhängigen Patentansprüche und der nachfolgenden Beschreibung.

Sauerstoff in einem wasserstoffreichen Gas aus einer Elektrolyse (Kathodenrohgas) kann mit Wasserstoff zu Wasser umgesetzt werden und zusammen mit dem Wasser, das bei der Elektrolyse nicht umgesetzt wurde, aus dem wasserstoffreichen Gas entfernt werden. Diese herkömmlich zur Entfernung von Sauerstoff genutzte Technik wird im Rahmen der vorliegenden Erfindung zur Entfernung von Wasserstoffverunreinigungen in einem an der Anode gebildeten, sauerstoffreichen Gas (Anodenrohgas) eingesetzt. Im Gegensatz zu den üblichen Sauerstoffgehalten in typischen Kathodenrohgasen liegt der Wasserstoffgehalt in dem Anodenrohgas meist höher, da die Kathodenseite oft auf einem höheren Druck betrieben wird.

Die zuvor genannte Aufgabe wird dabei erfindungsgemäß dadurch gelöst, dass einer Elektrolyseeinheit nachgeschaltet ein in der Elektrolyseeinheit aus einem Einsatz gewonnenes Anodenrohgas, das Sauerstoff und einen Teil Wasserstoff enthält, unter Erhalt eines an Wasserstoff abgereicherten Zwischengemischs zumindest teilweise einer katalytischen Umsetzung von Wasserstoff mit Sauerstoff zu Wasser unterworfen wird, wobei ein erster Teil des Zwischengemischs stromab der Elektrolyse und stromauf der katalytischen Umsetzung in das Anodenrohgas zurückgeführt wird. Ein Sauerstoff enthaltendes Gasprodukt wird unter Verwendung eines zweiten Teils des an Wasserstoff abgereicherten Zwischengemischs gebildet. Der "erste Teil des Zwischengemischs" kann, wie erwähnt, ein reiner Mengenanteil des Zwischengemischs sein, es kann sich aber auch um einen in nachfolgenden Schritten gewonnenen Anteil mit anderer stofflicher Zusammensetzung handeln. Entsprechendes gilt für den "zweiten Teil des Zwischengemischs".

Durch den Einsatz der erfindungsgemäß vorgeschlagenen Maßnahmen wird die Konzentration von Wasserstoff in den entsprechenden Anlagenteilen gesenkt. Insbesondere ist vorgesehen, dass die Wasserstoffkonzentration derart gesenkt wird, dass eine adiabate Temperaturerhöhung in der katalytischen Umsetzung auf einen gewünschten Wert begrenzt wird. Das hat den Vorteil, dass ein gewöhnlicher adiabater Reaktor mit geringem Investitionsaufwand verwendet werden kann. Auf eine kostenintensive Nutzung eines isothermen Reaktorkonzepts kann somit verzichtet werden.

Durch die erfindungsgemäße Rückführung des ersten Teils des an Wasserstoff abgereicherten Zwischengemischs, das insbesondere wasserstofffrei oder -arm sein kann, in das Anodenrohgas stromab der Elektrolyse kann auch bei hohen Konzentrationen von Wasserstoff in dem Anodenrohgas der Wasserstoffgehalt dort auf unproblematische Werte verdünnt werden und somit der in dem Anodenrohgas befindliche Sauerstoff aufgereinigt und verwertet werden. Stromab der Wasserstoffabreicherung liegt Wasserstoff durch eine entsprechende Entfernung ohnehin ebenfalls in unproblematischen Konzentrationen vor.

Zum Sicherstellen des Nichterreichens unerwünscht hoher Wasserstoffkonzentrationen können besonders vorteilhaft Sensoren an bestimmten Orten in einer Produktionsanlage vorgesehen sein, beispielsweise an einem Ausgang aus der Elektrolyseeinheit oder in der katalytischen Umsetzungseinheit. Diese können beispielsweise die Wasserstoffkonzentration direkt erfassen und bei Überschreiten eines vorbestimmten Schwellwerts kann eine erfindungsgemäße Verdünnung des Anodenrohgases mit dem ersten Teil des an Wasserstoff abgereicherten Zwischengemischs bewirkt werden, beispielsweise durch Öffnen eines Ventils, oder durch Vergrößerung der rückgeführten Menge des an Wasserstoff abgereicherten Zwischengemischs.

Eine weitere vorteilhafte Ausgestaltung derartiger Sensoren kann eine Temperaturüberwachung ermöglichen und folglich kann ein gesteuertes oder geregeltes Abschalten der katalytischen Umsetzung oder wiederum eine gesteuerte oder geregelte Verdünnung des Anodenrohgases bewirkt werden. Dies hat den Vorteil, dass die katalytische Umsetzung nur betrieben wird, wenn eine unerwünschte Temperaturerhöhung ausgeschlossen ist und damit eine zu hohe thermische Belastung des Katalysators, die zu seiner Beschädigung oder Zerstörung führen könnte, vermieden wird.

Von besonderem Vorteil ist ein Verfahren, bei dem der Schwellwert für die maximale Wasserstoffkonzentration in Abhängigkeit von anderen erfassten Parametern, wie beispielsweise Druck und/oder Temperatur in dem betreffenden Anlagenteil, variabel ist, und somit eine effiziente Verfahrensführung in der Hinsicht ermöglicht, dass eine Rückführung von wasserstofffreien bzw. -armen Gasen in das Anodenrohgas nur in einem erforderlichen Maße erfolgt und somit beispielsweise Verdichtungsenergie stromab der katalytischen Umsetzung eingespart werden kann.

In allen Varianten der erfindungsgemäßen Verfahren und Anlagen ist besonders vorteilhaft vorgesehen, dass nur Gasströme, die ursprünglich aus der Elektrolyse stammen, zur Verringerung der Wasserstoffkonzentration verwendet werden. Dadurch kann verhindert werden, dass verfahrensfremde Verunreinigungen, wie beispielsweise Stickstoff oder Argon, die nur schwer aus dem Produktgas zu entfernen wären, in das Verfahren eingeschleust werden.

In einer Ausgestaltung des Verfahrens wird vorteilhafterweise das zuvor erläuterte Zwischengemisch unter Erhalt einer an Wasser abgereicherten Zwischengemischfraktion und eines an Wasser reichen Kondensats zumindest teilweise einer Kondensation unterworfen. Die Zwischengemischfraktion oder ein Teil davon kann dabei unter Erhalt des Sauerstoff enthaltenden Gasprodukts und eines an Sauerstoff abgereicherten und an Wasser angereicherten Restgases einer Trocknung unterworfen und das Restgas teilweise oder vollständig in der erläuterten Weise zurückgeführt werden. Das Restgas oder dessen zurückgeführter Teil stellt also in dieser Ausgestaltung den mehrfach erläuterten ersten Teil des Zwischengemischs dar, wohingegen der zweite Teil in Form des Sauerstoff enthaltenden Gasprodukts bereitgestellt wird. Dies hat den Vorteil, dass Wasser, das eventuell in dem Gasprodukt stören könnte, nicht in das Gasprodukt überführt wird.

In einer weiteren vorteilhaften Ausgestaltung des Verfahrens wird der erste Teil des Zwischengemischs, der in das Anodenrohgas zurückgeführt wird, unter Verwendung zumindest eines Teils des Zwischengemischs und/oder der Zwischengemischfraktion und/oder des Restgases und/oder des Gasprodukts gebildet. Dies hat den Vorteil, dass nur Gase, die ohnehin in dem Verfahren vorhanden sind, zur Senkung der Wasserstoffkonzentration eingesetzt werden. Dadurch wird verhindert, dass störende Verunreinigungen, die aus Gasen bestehen, die nur schwer aus dem Gasprodukt entfernt werden können, in das Verfahren eingeschleust werden.

Vorteilhafterweise umfasst die Trocknung zumindest eine Temperaturwechseladsorption (TSA), da diese besonders effizient mit den übrigen Verfahrensschritten kombiniert werden kann. Es ist jedoch auch denkbar, dass eine andere Form der Trocknung zum Einsatz kommt, beispielsweise eine Druckwechseladsorption (PSA) oder ein Membranverfahren.

Vorteilhafterweise wird die erwähnte Zwischengemischfraktion, die nach der Kondensation verbleibt, stromauf der anschließenden Trocknung einer Verdichtung und unter Erhalt einer weiteren Zwischengemischfraktion und eines weiteren Kondensats einer weiteren Kondensation unterworfen, wobei die weitere Zwischengemischfraktion zumindest teilweise in die Trocknung geführt wird. Dadurch kann ein für die Trocknung vorteilhafter Druck eingestellt und Wasser schon vor der Trocknung abgetrennt werden, so dass die Trocknungseinheit kleiner dimensioniert werden kann.

Insbesondere kann jedes der genannten Kondensate oder können beide Kondensate gemeinsam, falls gebildet, zusammen mit dem Einsatz teilweise oder vollständig zu der Elektrolyse zurückgeführt werden. Dadurch kann ein Verfahren gemäß dieser Ausgestaltung besonders materialeffizient durchgeführt werden.

In einer vorteilhaften Ausführungsform wird bzw. werden stromab der Elektrolyse und/oder in der katalytischen Umsetzung ein oder mehrere Prozessparameter, die eine Wasserstoffkonzentration und/oder eine Gastemperatur und/oder einen Gasdruck umfassen, erfasst. Der erste Teil des Zwischengemischs wird in das Anodenrohgas zurückgeführt, wenn der eine oder die mehreren Prozessparameter über einem jeweils vorgegebenen Schwellwert liegt bzw. liegen. Mit besonderem Vorteil kann auch eine kontinuierliche Regelung der rückgeführten Menge an Zwischengemisch auf der Grundlage des einen oder der mehreren Prozessparameter durchgeführt werden. Dadurch kann einerseits sichergestellt werden, dass keine potentiell gefährliche Situation bei der Durchführung des Verfahrens entsteht, und andererseits eine unnötige Mehrbelastung der Anlage durch exzessive Rückführströme vermieden werden.

Des Weiteren kann vorteilhaft vorgesehen sein, bei einem Überschreiten eines vorbestimmten Grenzwerts des einen oder der mehreren Prozessparameter, insbesondere einer Temperaturerhöhung in der katalytischen Umsetzung, Anodenrohgas aus dem Verfahren auszuschleusen, beispielsweise abzublasen. Dadurch kann die Anlage geschützt werden, wenn die Verringerung der Wasserstoffkonzentration nicht ausreicht, um die Temperaturentwicklung zu begrenzen.

Auch ein Betrieb der katalytischen Umsetzung bei einem Adsorptionsdruck und/oder ein Betrieb der Elektrolyse bei einem Druck, bei dem auch die Trocknung betrieben wird, insbesondere bei einem Adsorptionsdruck, und/oder Erhöhung des Drucks des Recycles auf das Druckniveau der katalytischen Umsetzung kann vorteilhaft sein, da so im Wesentlichen das gesamte Verfahren auf einem einheitlichen Druckniveau betrieben werden kann.

Vorteilhafterweise kann eine Erhitzung des Anodenrohgases bzw. Rohsauerstoffs vor der katalytischen Umsetzung durch Wärmetausch gegen das erste Gemisch erfolgen, um Prozesswärme einzusparen. Dabei kann auch eine zumindest teilweise Kondensation des im Produktstrom enthaltenen Wassers auftreten, was wiederum Energie beim Betrieb der Kondensation einspart.

Erfindungsgemäß ist auch eine Anlage zur Herstellung eines Sauerstoff enthaltenden Gasprodukts mit einer Elektrolyseeinheit vorgesehen, die dazu eingerichtet ist, einen Wasser enthaltenden Einsatz unter Erhalt eines an Sauerstoff reichen und Wasserstoff enthaltenden Anodenrohgases und eines an Sauerstoff armen und an Wasserstoff reichen Kathodenrohgases einer Elektrolyse zu unterwerfen. Eine katalytische Umsetzungseinheit ist bereitgestellt, die dazu eingerichtet ist, das Anodenrohgas zumindest teilweise unter Erhalt eines an Wasserstoff abgereicherten Zwischengemischs einer katalytischen Umsetzung von Wasserstoff zu Wasser zu unterwerfen. Mittel sind vorgesehen, die dazu eingerichtet sind, einen ersten Teil des Zwischengemischs stromab der Elektrolyse und stromauf der katalytischen Umsetzung in das Anodenrohgas zurückzuführen. Ferner weist die Anlage Mittel auf, die dafür eingerichtet sind, das Sauerstoff enthaltende Gasprodukt unter Verwendung eines zweiten Teils des Zwischengemischs zu bilden.

Vorteilhafterweise ist die Anlage ferner mit Mitteln ausgestattet, die die Durchführung eines Verfahrens gemäß einer der oben beschriebenen vorteilhaften Ausgestaltungen ermöglichen.

### Figurenbeschreibung

Weitere Vorteile, Ausführungsformen sowie weitere Details der vorliegenden Erfindung werden im Folgenden unter Bezugnahme auf die beiliegenden Figuren näher beschrieben, wobei
Figur 1 eine vorteilhafte Ausgestaltung eines erfindungsgemäßen Verfahrens in Form eines schematischen Blockdiagramms zeigt, und
Figur 2 eine weitere vorteilhafte Ausgestaltung in Form eines schematischen Blockdiagramms eines erfindungsgemäßen Verfahrens, insbesondere unter Verwendung einer Hochdruck-Elektrolyse zeigt.

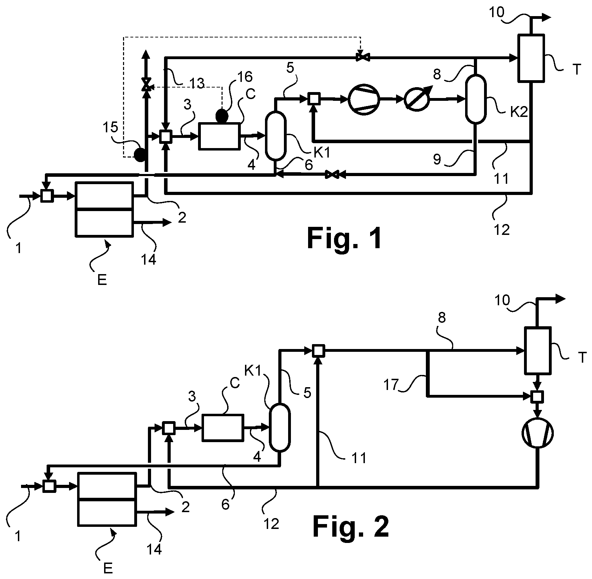

In dem in Figur 1 dargestellten Ausführungsbeispiel eines erfindungsgemäßen Verfahrens wird ein Einsatz 1, der zu einem überwiegenden Anteil aus Wasser besteht, einer Elektrolyse E unterworfen. Dabei werden ein an Sauerstoff armes und an Wasserstoff reiches Kathodenrohgas 14 und ein an Sauerstoff reiches und Wasserstoff enthaltendes Anodenrohgas 2 gebildet.

Das Anodenrohgas wird zumindest teilweise als Einsatz 3 einer katalytischen Umsetzung C unterworfen, wobei ein gegenüber dem Anodenrohgas an Wasserstoff abgereichertes Zwischengemisch 4 gebildet wird. In der katalytischen Umsetzung C wird Wasserstoff, der zu einem gewissen Anteil von beispielsweise 0,1% bis 2% in dem Anodenrohgas 2 enthalten ist, mit einem Teil des Sauerstoffs, der den Hauptanteil des Anodenrohgases 2 ausmacht, zu Wasser umgesetzt. Dadurch wird effektiv die Konzentration des Wasserstoffs stromab der katalytischen Umsetzung C gesenkt.

Das die katalytische Umsetzung C verlassende Zwischengemisch 4 wird in dem hier dargestellten Ausführungsbeispiel einer ersten Kondensation K1 unterworfen, wobei eine gegenüber dem Zwischengemisch 4 an Wasser abgereicherte Zwischengemischfraktion 5 und ein an Wasser reiches Kondensat 6 gebildet werden. Die Zwischengemischfraktion 5 wird auf ein Adsorptionsdruckniveau verdichtet und gekühlt. Nach der Kühlung wird die verdichtete Zwischengemischfraktion 5 einer weiteren Kondensation K2 unterworfen, wobei eine gegenüber der Zwischengemischfraktion 5 nochmals an Wasser abgereicherte weitere Zwischengemischfraktion 8 und ein weiteres Kondensat 9 gebildet werden. Die Kondensate 6, 9 werden zumindest teilweise zusammen mit dem Einsatz 1 zu der Elektrolyse E zurückgeführt.

Die weitere Zwischengemischfraktion 8 wird in dem Ausführungsbeispiel, das in Figur 1 dargestellt ist, einer Trocknung T in Form einer Temperaturwechseladsorption (TSA) unterworfen, wobei während einer Adsorptionsphase in dem Trocknereinsatz enthaltenes Restwasser an einem Adsorbens adsorbiert. Der in der weiteren Zwischengemischfraktion 8 enthaltene Sauerstoff adsorbiert im Wesentlichen nicht an dem Adsorbens und wird in ein Gasprodukt 10 überführt. Während einer Desorptionsphase wird der Auslass in Richtung des Gasprodukts 10 verschlossen und die Temperatur der TSA-Vorrichtung bzw. Trocknung T durch Überströmen mit warmem Spülgas oder direktes Erhitzen des Adsorbers erhöht. Dadurch desorbieren vorher an dem Adsorbens adsorbierte Moleküle, insbesondere Wassermoleküle, und können mit einem Spülgas (nicht gezeigt), das beispielsweise unter Verwendung des Produktstromes 10 gebildet wird, in ein Restgas 11, 12 überführt werden. Wenn das Adsorbens zu einem Großteil frei von adsorbiertem Wasser und anderen Verunreinigungen ist, wird die Temperatur wieder gesenkt und eine weitere Adsorptionsphase eingeleitet.

Vorteilhafterweise werden mehrere TSA-Vorrichtungen parallel zueinander im Wechsel betrieben, so dass sich zu jedem Zeitpunkt zumindest eine der mehreren TSA-Vorrichtungen in der Adsorptionsphase befindet. Dadurch kann ein kontinuierlicher Strom des Gasprodukts 10 bereitgestellt werden.

Insbesondere kann sichergestellt werden, dass der überwiegende Teil der adsorbierten Spezies wieder desorbiert hat, indem die erhöhte Temperatur über eine vorbestimmte Zeit hinweg gehalten wird, oder indem eine Konzentrationsmessung stromab der TSA-Vorrichtung bzw. Trocknung T in dem Restgas 11, 12 erfolgt. In dem Fall, dass eine Zeitspanne vorbestimmt ist, kann vorteilhafterweise das Verfahren so gesteuert werden, dass die mehreren TSA-Vorrichtungen in der Trocknung T im Wechsel betrieben werden können, während die konzentrationsabhängige Steuerung den Vorteil hat, dass die Desorptionsphase bedarfsgerecht bemessen werden kann und nicht unnötigerweise in die Länge gezogen wird. Dadurch kann die Effizienz des Gesamtverfahrens gesteigert werden.

Zumindest ein Teil des Restgases 12 kann stromauf der katalytischen Umsetzung C in das Anodenrohgas bzw. den Einsatz 3 zurückgeführt werden, um die Temperaturerhöhung in der katalytischen Umsetzung durch Absenkung der Wasserstoffkonzentration zu regeln. Zu demselben Zweck kann auch stromauf der Trocknung T ein Teil der weiteren Zwischenproduktfraktion 8 als Steuerstrom 13 in das Anodenrohgas 2 bzw. den Einsatz 3 zurückgeführt werden.

Optional kann ein weiterer Teil des Restgases 11 stromab der katalytischen Umsetzung C in das Zwischengemisch 4 (nicht dargestellt) oder in die Zwischengemischfraktion 5 zurückgeführt werden. Dadurch kann als Spülgas genutztes Produkt, auch wenn es nicht zur Temperaturregelung in der katalytischen Umsetzung C genutzt wird, dennoch zur Erhöhung der Prozessausbeute wieder in den Prozess zurückgeführt werden.

In dem in Figur 1 dargestellten Ausführungsbeispiel sind eine Reihe von Sensoren in die Anlage integriert, um Informationen über den Zustand der einzelnen Verfahrensschritte abrufen zu können und dadurch die Temperaturerhöhung in der katalytischen Umsetzung C durch Einstellen der rückgeführten Ströme 12 oder 13 zu regeln. Beispielsweise erfassen Wasserstoffsensoren 15 die Wasserstoffkonzentration der verschiedenen Gasströme, wie zum Beispiel des Anodenrohgases 2. Selbstverständlich können auch an anderen Stellen Wasserstoffkonzentrationen erfasst werden (nicht dargestellt), insbesondere in einem Gasstrom stromab der katalytischen Umsetzung C um den Grad der Umsetzung zu quantifizieren.

Ein Temperatursensor 16 kann zusätzlich die Temperatur in der katalytischen Umsetzung erfassen. Mit Hilfe dieser Information kann vorteilhafterweise die Zufuhr von Anodenrohgas bzw. Einsatz 3 zu der katalytischen Umsetzung C reduziert oder gestoppt werden, wenn die Temperatur infolge der katalysierten Reaktion so stark ansteigt, dass die Gefahr einer Katalysatordegradation besteht. Im Falle eines derartigen Temperaturanstiegs in der katalytischen Umsetzung kann Anodenrohgas zeitweise aus dem Verfahren ausgeschleust werden, bis die Temperatur sich wieder auf einem für das Verfahren verträglichen Niveau stabilisiert hat. Die Temperatur, die von dem Temperatursensor 16 erfasst wird, kann aber auch als Regelgröße zum Einstellen des Steuerstroms 13 genutzt werden.

Eine vorteilhafte Ausgestaltung eines erfindungsgemäßen Verfahrens ist in Figur 2 schematisch dargestellt. In diesem Ausführungsbeispiel ist die Elektrolyse E in Form einer Hochdruckelektrolyse ausgeführt, bei der das Anodenrohgas 2 bereits auf dem Adsorptionsdruckniveau anfällt. Dadurch kann vorteilhafterweise die Verdichtung stromab der katalytischen Umsetzung C entfallen, so dass sich auch die Notwendigkeit der weiteren Kondensation K2 erübrigt. In diesem Fall ist lediglich ein Verdichter für die Rückführung des Restgases aus der Trocknung T und für die Rückführung eines Teils des Gasstromes 8, stromauf der Trocknung, welcher als Steuerstrom 17 verwendet wird, nötig. Um einen separaten Verdichter für den Steuerstrom 17 einzusparen kann das Restgas aus der Trocknung T gemeinsam mit dem Steuerstrom 17 über einen Verdichter zurückgeführt werden und stromab des Verdichters entsprechend der Temperaturregelung stromauf (Strom 12) oder stromab (Strom 11) der katalytischen Umsetzung C eingespeist werden. Ansonsten kann die Verfahrensführung identisch mit dem Verfahren sein, das unter Bezugnahme auf Figur 1 beschrieben wurde.

## Patentansprüche

1. Verfahren zur Herstellung eines Sauerstoff enthaltenden Gasprodukts (10), bei dem ein Wasser enthaltender Einsatz (1) unter Erhalt eines an Sauerstoff reichen und Wasserstoff enthaltenden Anodenrohgases (2) und eines an Sauerstoff armen und an Wasserstoff reichen Kathodenrohgases (14) einer Elektrolyse (E) unterworfen wird, **dadurch gekennzeichnet, dass** das Anodenrohgas (2) zumindest teilweise unter Erhalt eines an Wasserstoff abgereicherten Zwischengemischs (4) einer katalytischen Umsetzung (C) von Wasserstoff zu Wasser unterworfen wird, dass ein erster Teil des Zwischengemischs (4) stromab der Elektrolyse (E) und stromauf der katalytischen Umsetzung (C) in das Anodenrohgas (2) zurückgeführt wird, und dass das Sauerstoff enthaltende Gasprodukt unter Verwendung zumindest eines zweiten Teils des Zwischengemischs (4) gebildet wird.

2. Verfahren nach Anspruch 1, bei dem das erste Zwischengemisch (4) unter Erhalt einer an Wasser abgereicherten Zwischengemischfraktion (5) und eines an Wasser reichen Kondensats (6) zumindest teilweise einer Kondensation (K1) unterworfen wird.

3. Verfahren nach Anspruch 2, bei dem zumindest ein Teil der Zwischengemischfraktion (5) unter Erhalt des Sauerstoff enthaltenden Gasprodukts (10) und eines an Sauerstoff abgereicherten und an Wasser angereicherten Restgases (12) einer Trocknung (T) unterworfen wird.

4. Verfahren nach einem der vorstehenden Ansprüche, wobei der erste Teil des Zwischengemischs (4), der in das Anodenrohgas (2) zurückgeführt wird, unter Verwendung zumindest eines Mengenanteils des Zwischengemischs (4) und/oder der Zwischengemischfraktion (5) und/oder des Restgases (12) und/oder des Gasprodukts (10) gebildet wird.

5. Verfahren nach einem der vorstehenden Ansprüche, wobei der erste Teil des Zwischengemischs, in einer Menge in das Anodenrohgas (2) oder den anodenseitigen Einsatz (1) zurückgeführt wird, die derart bemessen ist, dass eine Wasserstoffkonzentration in dem Anodenrohgas (2) stromab von der Zurückführung höchstens 0,1 %, 0,2 %, 0,3 %, 0,5 %, 1 % oder 2 % beträgt.

6. Verfahren nach Anspruch 3, wobei die Trocknung (T) eine Temperaturwechseladsorption (TSA) umfasst.

7. Verfahren nach Anspruch 3 oder 6, wobei die Zwischengemischfraktion (5) stromauf der Trocknung (T) einer Verdichtung und unter Erhalt einer weiteren Zwischengemischfraktion (8) und eines weiteren Kondensats (9) einer weiteren Kondensation (K2) unterworfen wird.

8. Verfahren nach einem der vorstehenden Ansprüche, wobei zumindest eines der Kondensate (6, 9) zusammen mit dem Einsatz (1) teilweise oder vollständig zu der Elektrolyse (E) zurückgeführt wird.

9. Verfahren nach einem der vorstehenden Ansprüche, wobei stromab der Elektrolyse (E) und/oder in der katalytischen Umsetzung (C) ein oder mehrere Prozessparameter, die eine Wasserstoffkonzentration und/oder eine Gastemperatur und/oder einen Unterschied zwischen zwei Gastemperaturen und/oder einen Gasdruck umfassen, erfasst wird bzw. werden, und wobei der erste Teil des ersten Gemischs (4) in das Anodenrohgas (2)
i) zurückgeführt wird, wenn der eine oder die mehreren Prozessparameter über einem jeweils vorgegebenen Schwellwert liegt bzw. liegen; oder
ii) in einer anhand des bzw. der erfassten Prozessparameter kontinuierlich geregelten Menge zurückgeführt wird.

10. Verfahren nach Anspruch 9, wobei Anodenrohgas (2) aus dem Verfahren ausgeschleust wird, wenn der eine oder die mehreren Prozessparameter, insbesondere der Unterschied zwischen zwei Gastemperaturen, einen vorbestimmten Grenzwert übersteigen.

11. Verfahren nach einem der vorstehenden Ansprüche, wobei die Elektrolyse (E) und/oder die katalytische Umsetzung (C) auf einem Druckniveau betrieben wird, auf dem auch die Trocknung (T) betrieben wird; und/oder wobei der in das Anodenrohgas (2) zurückgeführte Teil des ersten Gemischs (4) auf das Druckniveau verdichtet wird, auf dem die katalytische Umsetzung (C) betrieben wird.

12. Verfahren nach einem der vorstehenden Ansprüche, wobei das Anodenrohgas (2) in einem Wärmetauscher gegen das erste Gemisch (4) erhitzt wird.

13. Anlage zur Herstellung eines Sauerstoff enthaltenden Gasprodukts (10) mit einer Elektrolyseeinheit, die dazu eingerichtet ist, einen Wasser enthaltenden Einsatz (1) unter Erhalt eines an Sauerstoff reichen und Wasserstoff enthaltenden Anodenrohgases (2) und eines an Sauerstoff armen und an Wasserstoff reichen Kathodenrohgases (14) einer Elektrolyse (E) zu unterwerfen, **gekennzeichnet durch** eine katalytische Umsetzungseinheit, die dazu eingerichtet ist, unter Verwendung zumindest eines Teils des Anodenrohgases (2) unter Erhalt eines an Wasserstoff abgereicherten Zwischengemischs (4) einer katalytischen Umsetzung (C) von Wasserstoff zu Wasser zu unterwerfen, durch Mittel, die dazu eingerichtet sind, einen ersten Teil des Zwischengemischs (4) stromab der Elektrolyse (E) und stromauf der katalytischen Umsetzung (C) in das Anodenrohgas (3) zurückzuführen, und das Sauerstoff enthaltende Gasprodukt (10) unter Verwendung eines zweiten Teils des Zwischengemischs (4) zu bilden.

## Claims

1. A method for producing an oxygen-containing gas product (10), in which a water-containing feedstock (1) is subjected to electrolysis (E) to obtain an oxygen-rich raw anode gas (2) containing hydrogen and an oxygen-poor and hydrogen-rich raw cathode gas (14), **characterized in that** at least some of the raw anode gas (2) is subjected to catalytic conversion (C) of hydrogen to water to obtain a hydrogen-depleted intermediate mixture (4), **that** a first portion of the intermediate mixture (4) is returned to the raw anode gas (2) downstream of the electrolysis (E) and upstream of the catalytic conversion (C), **and that** the oxygen-containing gas product is formed using at least a second portion of the intermediate mixture (4).

2. The method according to claim 1, wherein at least some of the first intermediate mixture (4) is subjected to condensation (K1) to obtain a water-depleted intermediate mixture fraction (5) and a water-rich condensate (6).

3. The method according to claim 2, wherein at least some of the intermediate mixture fraction (5) is subjected to drying (T) to obtain the gas product (10) containing oxygen and an oxygen-depleted and water-enriched residual gas (12).

4. The method according to any one of the preceding claims, wherein the first portion of the intermediate mixture (4) which is returned to the raw anode gas (2) is formed using at least a proportion of the intermediate mixture (4) and/or the intermediate mixture fraction (5) and/or the residual gas (12) and/or the gas product (10).

5. The method according to any one of the preceding claims, wherein the first portion of the intermediate mixture is returned to the raw anode gas (2) or the anode-side feedstock (1) in such an amount that a hydrogen concentration in the raw anode gas (2) downstream of where said first portion is returned is at most 0.1%, 0.2%, 0.3%, 0.5%, 1% or 2%.

6. The method according to claim 3, wherein the drying (T) involves temperature swing adsorption (TSA).

7. The method according to either claim 3 or claim 6, wherein the intermediate mixture fraction (5) is subjected to compression upstream of the drying (T) and to further condensation (K2) to obtain a further intermediate mixture fraction (8) and a further condensate (9).

8. The method according to any one of the preceding claims, wherein at least one of the condensates (6, 9) is partially or completely returned to the electrolysis process (E) together with the feedstock (1).

9. The method according to any one of the preceding claims, wherein one or more process parameters comprising a hydrogen concentration and/or a gas temperature and/or a difference between two gas temperatures and/or a gas pressure are recorded downstream of the electrolysis (E) and/or during the catalytic conversion (C), and wherein the first portion of the first mixture (4) is returned to the raw anode gas (2)
i) when the one or more process parameters are above a predetermined threshold value; or
ii) in an amount controlled continuously using the detected process parameters.

10. The method according to claim 9, wherein raw anode gas (2) is discharged from the method when the one or more process parameters, in particular the difference between two gas temperatures, exceed a predetermined limit value.

11. The method according to any one of the preceding claims, wherein the electrolysis (E) and/or the catalytic conversion (C) is/are carried out at a pressure level at which the drying (T) is also carried out; and/or wherein the portion of the first mixture (4) returned to the raw anode gas (2) is compressed at the pressure level at which the catalytic conversion (C) is carried out.

12. The method according to any one of the preceding claims, wherein the raw anode gas (2) is heated in a heat exchanger against the first mixture (4).

13. A system for producing an oxygen-containing gas product (10), comprising an electrolysis unit which is designed to subject a water-containing feedstock (1) to electrolysis (E) to obtain an oxygen-rich raw anode gas (2) containing hydrogen and an oxygen-poor and hydrogen-rich raw cathode gas (14), **characterized by** a catalytic conversion unit which is designed to use at least a portion of the anode raw gas (2) to subject a catalytic conversion (C) from hydrogen to water to obtain a hydrogen-depleted intermediate mixture (4) by means which are designed to return a first portion of the intermediate mixture (4) to the anode raw gas (3) downstream of the electrolysis (E) and upstream of the catalytic conversion (C), and to form the oxygen-containing gas product (10) using a second portion of the intermediate mixture (4).

## Revendications

1. Procédé pour la production d'un produit gazeux (10) contenant de l'oxygène, dans lequel une charge (1) contenant de l'eau est soumise à une électrolyse (E) avec obtention d'un gaz brut anodique (2) riche en oxygène et contenant de l'hydrogène et d'un gaz brut cathodique (14) pauvre en oxygène et riche en hydrogène, **caractérisé en ce que** le gaz brut anodique (2) est soumis au moins partiellement à une conversion catalytique (C) de l'hydrogène en eau avec obtention d'un mélange intermédiaire (4) appauvri en hydrogène, **en ce qu'**une première partie du mélange intermédiaire (4) est recyclée dans le gaz brut anodique (2) en aval de l'électrolyse (E) et en amont de la conversion catalytique (C), **et en ce que** le produit gazeux contenant de l'oxygène est formé en utilisant au moins une seconde partie du mélange intermédiaire (4).

2. Procédé selon la revendication 1, dans lequel le premier mélange intermédiaire (4) est soumis au moins partiellement à une condensation (K1) avec obtention d'une fraction de mélange intermédiaire (5) appauvrie en eau et d'un condensat (6) riche en eau.

3. Procédé selon la revendication 2, dans lequel au moins une partie de la fraction de mélange intermédiaire (5) est soumise à un séchage (T) avec obtention du produit gazeux (10) contenant de l'oxygène et d'un gaz résiduel (12) appauvri en oxygène et enrichi en eau.

4. Procédé selon l'une des revendications précédentes, dans lequel la première partie du mélange intermédiaire (4) qui est recyclée dans le gaz brut anodique (2) est formée en utilisant au moins une proportion quantitative du mélange intermédiaire (4) et/ou de la fraction de mélange intermédiaire (5) et/ou du gaz résiduel (12) et/ou du produit gazeux (10).

5. Procédé selon l'une des revendications précédentes, dans lequel la première partie du mélange intermédiaire est recyclée dans le gaz brut anodique (2) ou dans la charge (1) côté anode en une quantité calculée de telle sorte qu'une concentration en hydrogène dans le gaz brut anodique (2) en aval du recyclage est d'au plus 0,1 %, 0,2 %, 0,3 %, 0,5 %, 1 % ou 2 %.

6. Procédé selon la revendication 3, dans lequel le séchage (T) comprend une adsorption à température modulée (TSA).

7. Procédé selon la revendication 3 ou 6, dans lequel la fraction de mélange intermédiaire (5) est soumise, en amont du séchage (T), à une compression et à une autre condensation (K2) avec obtention d'une autre fraction de mélange intermédiaire (8) et d'un autre condensat (9).

8. Procédé selon l'une des revendications précédentes, dans lequel au moins l'un des condensats (6, 9) est partiellement ou totalement recyclé vers l'électrolyse (E) conjointement avec la charge (1).

9. Procédé selon l'une des revendications précédentes, dans lequel, en aval de l'électrolyse (E) et/ou dans la conversion catalytique (C), un ou plusieurs paramètres de processus sont détectés, lesquels comprennent une concentration en hydrogène et/ou une température de gaz et/ou une différence entre deux températures de gaz et/ou une pression de gaz, et dans lequel la première partie du premier mélange (4) dans le gaz brut anodique (2)
i) est recyclée lorsque le ou les paramètres de processus sont supérieurs à une valeur seuil respectivement prédéfinie ; ou
ii) est recyclée en une quantité régulée en continu sur la base du ou des paramètres de processus détectés.

10. Procédé selon la revendication 9, dans lequel du gaz brut anodique (2) est évacué du procédé lorsque le ou les paramètres de procédé, en particulier la différence entre deux températures de gaz, dépassent une valeur limite prédéterminée.

11. Procédé selon l'une des revendications précédentes, dans lequel l'électrolyse (E) et/ou la conversion catalytique (C) sont effectuées à un niveau de pression auquel est également effectué le séchage (T) ; et/ou dans lequel la partie du premier mélange (4) recyclée dans le gaz brut anodique (2) est comprimée au niveau de pression auquel est effectuée la conversion catalytique (C).

12. Procédé selon l'une des revendications précédentes, dans lequel le gaz brut anodique (2) est chauffé dans un échangeur de chaleur contre le premier mélange (4).

13. Installation pour la production d'un produit gazeux (10) contenant de l'oxygène, comportant une unité d'électrolyse qui est conçue pour soumettre une charge (1) contenant de l'eau à une électrolyse (E) avec obtention d'un gaz brut anodique (2) riche en oxygène et contenant de l'hydrogène et d'un gaz brut cathodique (14) pauvre en oxygène et riche en hydrogène, **caractérisée par** une unité de conversion catalytique qui est conçue pour soumettre à une conversion catalytique (C) de l'hydrogène en eau en utilisant au moins une partie du gaz brut anodique (2) avec obtention d'un mélange intermédiaire (4) appauvri en hydrogène, au moyen de moyens qui sont conçus pour recycler une première partie du mélange intermédiaire (4) dans le gaz brut anodique (3) en aval de l'électrolyse (E) et en amont de la conversion catalytique (C), et pour former le produit gazeux (10) contenant de l'oxygène en utilisant une seconde partie du mélange intermédiaire (4).
